# FASCICULE DE BREVET EUROPEEN

(11) **EP 2 465 465 B1**
(45) Date de publication et mention de la délivrance du brevet: **24.04.2013**
(21) Numéro de dépôt: 11194055.7
(22) Date de dépôt: 16.12.2011
(51) Int. Cl.: A61C 13/10, A61C 13/01, A61C 13/20

(54) **Ensemble et procédé pour fabriquer une prothèse dentaire**
Anordnung und Verfahren zum Herstellen einer Zahnprothese
Unit and method for manufacturing a dental prosthesis

(30) Priorité: 20.12.2010 FR 1060834
(43) Date de publication de la demande: 20.06.2012
(73) Titulaire: Laboratoire Bienfait, 69340 Francheville (FR)
(72) Inventeur: Bienfait, Alexandre, 69004 Lyon (FR)
(74) Mandataire: Chevalier, Renaud Philippe

(56) Documents cités:
- US-A- 4 161 065
- US-A- 4 533 325
- US-A1- 2007 287 131

## Description

La présente invention concerne un ensemble, pour positionner des dents synthétiques en vue du moulage d'une prothèse dentaire à implanter sur une mâchoire. Par ailleurs, la présente invention concerne un procédé pour fabriquer une prothèse dentaire à implanter sur une mâchoire, ce procédé mettant en oeuvre un tel ensemble.

La présente invention trouve application dans le domaine de la fabrication de prothèses dentaires à implanter. Un procédé et un ensemble conformes à l'invention peuvent par exemple être mis en oeuvre pour réaliser des prothèses dentaires à implanter.

Un procédé de l'art antérieur, pour fabriquer une prothèse dentaire à implanter, comprend les étapes consistant à:
- définir un modèle optique tridimensionnel de la mâchoire, par acquisition d'images par rayons X;
- à partir du modèle optique tridimensionnel, fabriquer un guide de chirurgie;
- à partir du modèle optique tridimensionnel, fabriquer un modèle de travail, généralement en plâtre, dit maître-modèle.
- recouvrir de cire le maître-modèle ;
- positionner des dents synthétiques sur la cire ;
- former un moufle en plâtre autour des dents synthétiques ;
- évacuer la cire;
- injecter une résine dans le moule formé par le maître-modèle et le moufle de façon à réaliser le moulage de la prothèse dentaire.

Cependant, un tel procédé est particulièrement long à mettre en oeuvre, car il nécessite de fabriquer plusieurs pièces de précision, à savoir le guide de chirurgie et le maître-modèle, ce qui représente environ 5 h de travail. En outre, ce travail est très fragmenté dans le temps, car il fait intervenir différents opérateurs : d'une part pour fabriquer le guide de chirurgie et le maître-modèle et d'autre part pour positionner les dents synthétiques et injecter la résine.

Un art antérieur important est le document US 4533325.

Un objet de la présente invention est de résoudre, en tout ou partie, les problèmes mentionnés ci-avant.

A cet effet, la présente invention a pour objet un ensemble, pour positionner des dents synthétiques en vue du moulage d'une prothèse dentaire à implanter sur une mâchoire, l'ensemble comprenant une paroi, une partie vestibulaire de la paroi présentant des premières cavités ayant chacune une forme complémentaire à au moins une portion de la face vestibulaire d'une dent synthétique respective, une partie occlusale de la paroi présentant des deuxièmes cavités ayant chacune une forme complémentaire à au moins une portion de la face occlusale d'une dent synthétique respective, l'ensemble comprenant en outre des moyens de positionnement de l'ensemble sur une embase globalement complémentaire à l'ensemble de façon à réaliser le moulage de la prothèse dentaire. De plus ces moyens de positionnement comprennent:
- au moins deux tiges qui sont reliées à la partie occlusale de la paroi et qui convergent dans une région linguale de l'ensemble; et
- un composant de référence, tel qu'un cube, présentant une surface de positionnement, de préférence plane, destinée à coopérer par complémentarité de forme avec une surface de positionnement de l'embase de façon à former un moule pour réaliser le moulage de la prothèse dentaire.

En d'autres termes, un ensemble conforme à l'invention forme une moitié de moule où peuvent être logées les dents synthétiques à fixer par injection de résine. De plus, les moyens de positionnement assurent une mise en place précise de l'ensemble, donc des dents synthétiques, sur l'embase, lors de l'injection de résine pour mouler la prothèse dentaire.

Un ensemble conforme à l'invention permet de fabriquer une prothèse dentaire simplement à partir d'un modèle optique tridimensionnel, sans employer de maître-modèle. En évitant la fabrication du maître-modèle et son utilisation, un ensemble conforme à l'invention permet de réduire significativement, à environ 1h30, le temps cumulé de fabrication d'une prothèse dentaire à implanter.

De plus, un tel composant de référence avec surface de référence et surface de positionnement permet de positionner de façon précise l'ensemble sur l'embase avant l'injection de résine, ce qui permet de former une prothèse dentaire de grande précision.

Selon un mode de réalisation, le composant de référence comprend en outre une surface de guidage substantiellement en forme de cavité sphérique de façon à recevoir un composant de guidage d'une armature, de préférence métallique, destinée à renforcer la prothèse dentaire

Ainsi, une telle surface de guidage permet, lorsqu'elle reçoit le composant de guidage, de positionner une armature en vue de mouler une prothèse dentaire composite en résine et alliage métallique.

Selon un mode de réalisation, la paroi est en cire, en métal ou en matériau plastique de synthèse.

Ainsi, une paroi faite d'un tel matériau peut être réalisée avec précision par prototypage rapide.

Par ailleurs, la présente invention a aussi pour objet un procédé, pour fabriquer une prothèse dentaire à implanter sur une mâchoire, le procédé comprenant les étapes:
- définir un modèle optique tridimensionnel de la mâchoire, par acquisition d'images;
- à partir du modèle optique tridimensionnel, réaliser un ensemble tel que précédemment exposé;
- réaliser une embase globalement complémentaire à l'ensemble;
- positionner des dents synthétiques sur l'ensemble avec leurs faces vestibulaires placées dans des premières cavités respectives et leurs faces occlusales placées dans des deuxièmes cavités respectives ;
- insérer une armature, de préférence métallique, entre l'ensemble et l'embase, de façon à renforcer la prothèse dentaire, un composant de guidage de l'armature étant reçu dans la surface de guidage ;
- former un moule en mettant en place les moyens de positionnement de l'ensemble sur l'embase; et
- injecter une résine dans le moule de façon à réaliser le moulage de la prothèse dentaire.

En d'autres termes, un procédé conforme à l'invention forme, à partir du modèle optique tridimensionnel, un moule qui supporte les dents synthétitques lors du moulage de la prothèse dentaire par l'injection de résine.

Ainsi, un procédé conforme à l'invention permet de simplifier et d'écourter la fabrication d'une prothèse dentaire. L'étape d'insertion permet de réaliser une prothèse dentaire composite en résine et alliage métallique.

Selon un mode de réalisation, l'étape pour réaliser l'ensemble met en oeuvre une méthode de prototypage rapide telle que l'impression tridimensionnelle, la stéréolithographie, l'usinage à commande numérique ou la construction additive directe par laser.

Ainsi, une telle méthode de prototypage rapide permet de réaliser l'ensemble, donc une prothèse dentaire, avec une grande précision.

Selon un mode de réalisation, après l'étape d'injection de résine, la prothèse dentaire est percée, de façon à réaliser des alésages traversant certaines dents synthétiques, au moyen d'un guide de perçage positionné sur l'embase.

Ainsi, une telle étape facilite un perçage précis de la mâchoire pour y implanter la prothèse dentaire.

Selon un mode de réalisation, l'acquisition d'images est réalisée au moyen de rayons X ou par numérisation d'un modèle physique primaire.

Ainsi, on obtient un modèle optique tridimensionnel précis.

La présente invention sera bien comprise et ses avantages ressortiront aussi à la lumière de la description qui va suivre, qui est donnée uniquement à titre d'exemple non limitatif et qui est faite en référence aux dessins annexés, dans lesquels:
- la figure 1 est une vue en perspective d'un ensemble conforme à l'invention ;
- la figure 2 est une vue en perspective de l'ensemble de la figure 1, suivant un angle différent de la figure 1;
- la figure 3 est une vue en perspective d'une embase mise en oeuvre dans un procédé conforme à l'invention ;
- la figure 4 est une vue de dessus de l'embase de la figure 3;
- la figure 5 est une vue en perspective, selon un angle différent des figures 1 et 3, de l'ensemble de la figure 1 et de l'embase de la figure 3 illustrant une étape d'un procédé conforme à l'invention;
- la figure 6 est une vue de côté de l'ensemble de la figure 1 et de l'embase de la figure 3 illustrant l'étape de la figure 5;
- la figure 7 est une vue en perspective, suivant l'angle de la figure 1, d'une armature mise en oeuvre dans un procédé conforme à l'invention;
- la figure 8 est une vue en perspective, suivant l'angle de la figure 5, de l'armature de la figure 7 et de l'embase de la figure 2 illustrant une étape d'un procédé conforme à l'invention;
- la figure 9 est une vue similaire à la figure 8 illustrant une étape ultérieure d'un procédé conforme à l'invention;
- la figure 10 est une vue similaire à la figure 7 illustrant une variante de l'armature de la figure 7;
- la figure 11 est une vue en perspective d'un guide de perçage mis en oeuvre au cours d'un procédé conforme à l'invention ; et
- la figure 12 est une vue en perspective d'une variante au guide de perçage de la figure 11.

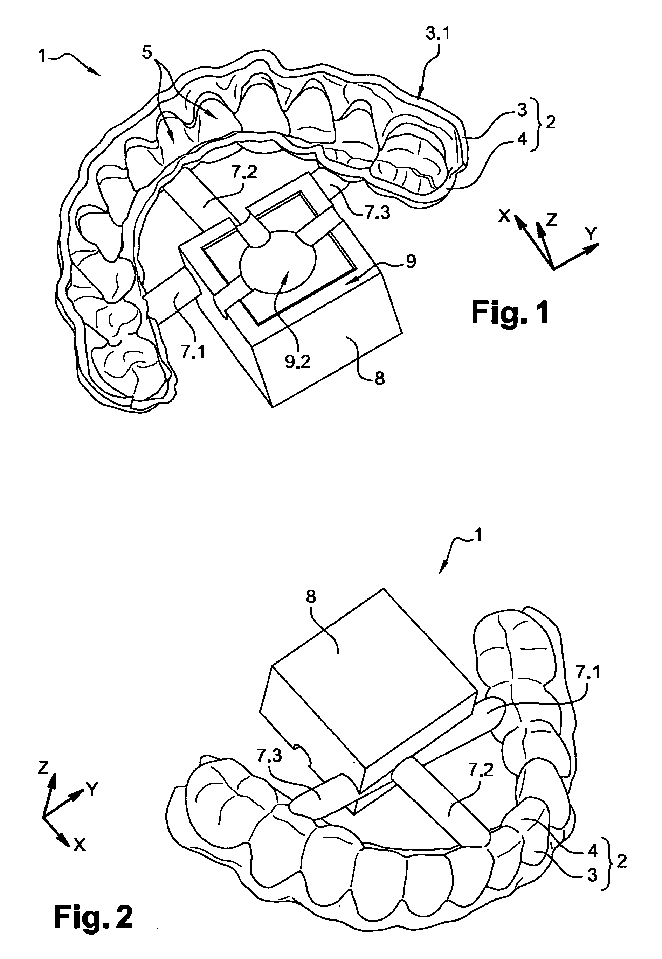

La figure 1 illustre un ensemble 1 pour positionner des dents synthétiques non représentées, en vue du moulage d'une prothèse dentaire non représentée à implanter sur une mâchoire non représentée. Dans la présente demande, une mâchoire désigne l'os maxillaire et les dents, synthétiques ou naturelles, que porte cet os. Le positionnement des dents synthétiques est fait suivant trois dimensions X, Y et Z. Une prothèse dentaire de type implantaire est destinée à être vissée dans la mâchoire.

La prothèse dentaire que permet de réaliser l'ensemble 1 comporte plusieurs dents synthétiques juxtaposées. De telles dents synthétiques sont préfabriquées et disponibles dans le commerce. Elles peuvent être en résine ou en céramique.

L'ensemble 1 comprend une paroi 2 qui s'étend substantiellement sur une hauteur correspondant sensiblement à la hauteur des dents synthétiques, c'est-à-dire à une distance séparant leurs racines de leurs couronnes. La paroi 2 forme un arc de cercle dont la courbure suit la mâchoire où doit être implanté la prothèse dentaire. Dans l'exemple des figures, la paroi 2 est en matériau plastique de synthèse, par exemple en résine thermodurcissable. Alternativement, la paroi peut être en cire ou en métal.

La paroi 2 comporte une partie vestibulaire 3 et une partie occlusale 4. La partie vestibulaire 3 présente des premières cavités 5 qui ont chacune une forme complémentaire à une portion, ici la quasi-totalité, de la face vestibulaire d'une dent synthétique respective. Comme le montre la figure 2, la partie occlusale 4 présente des deuxièmes cavités 6 qui ont chacune une forme complémentaire à une portion, ici la quasi-totalité, de la face occlusale d'une dent synthétique respective. Les premières cavités 5 et les deuxièmes cavités 6 permettent de maintenir chaque dent synthétique en position par rapport à la paroi 2, donc à l'ensemble 1.

L'ensemble 1 comprend en outre trois tiges 7.1, 7.2 et 7.3 et un composant de référence 8 qui est en forme de cube. Les tiges 7.1, 7.2 et 7.3 sont rectilignes et reliées à la partie occlusale 4 de la paroi 2 et elles convergent dans une région linguale de l'ensemble 1, où elles sont solidarisées au composant de référence 8. Dans l'exemple des figures, les tiges 7.1, 7.2 et 7.3 et le composant de référence 8 sont constitués du même matériau plastique de synthèse que la paroi 2.

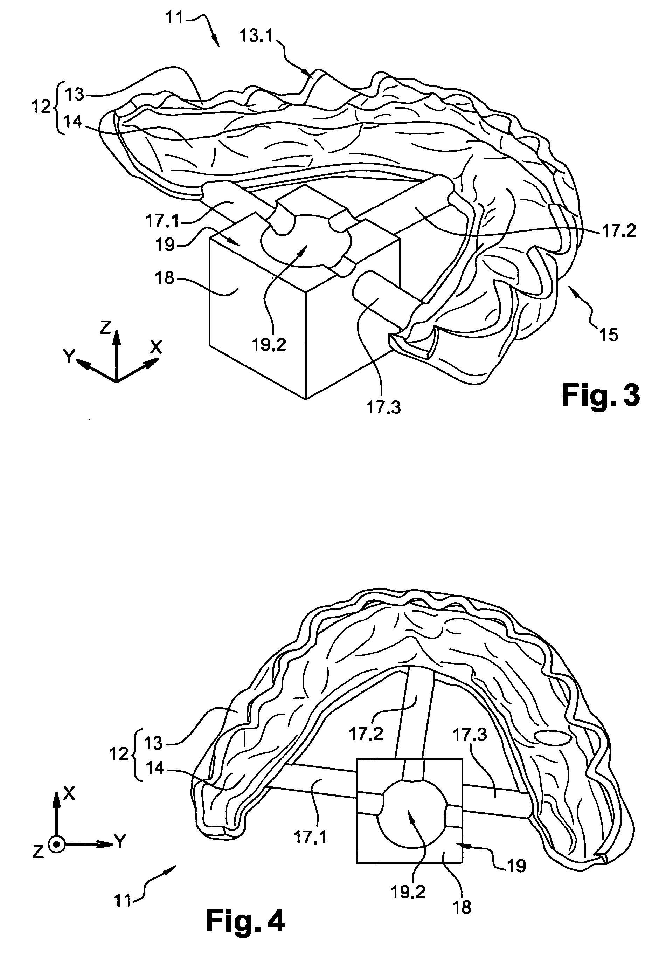

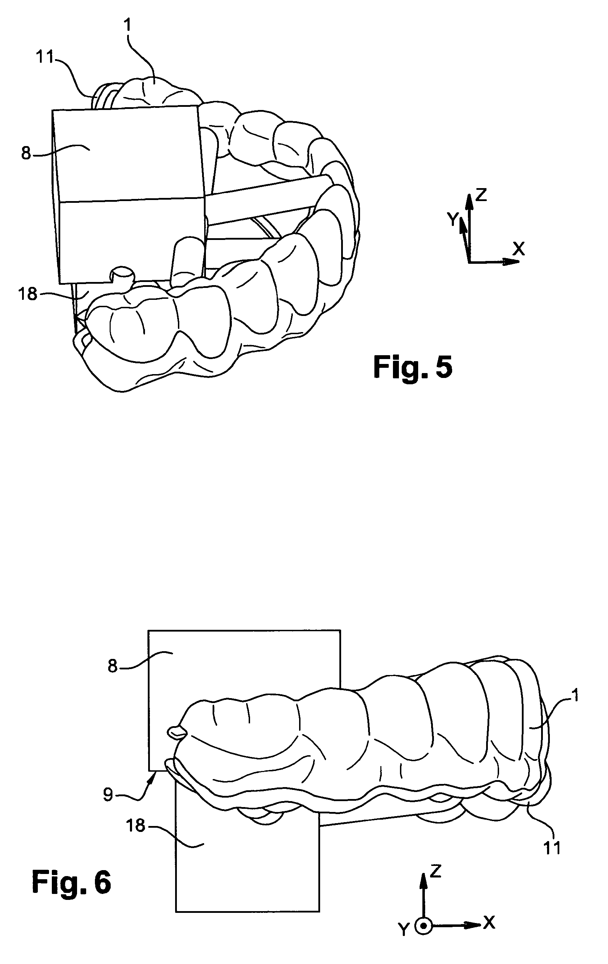

Le composant de référence 8 présente une surface de positionnement 9 qui est plane et adaptée pour coopérer avec une surface complémentaire, en l'occurrence plane. Comme cela est décrit ci-après en relation avec les figures 5 et 6, les tiges 7.1, 7.2 et 7.3 et le composant de référence 8 forment des moyens de positionnement de l'ensemble 1 sur une embase complémentaire, telle qu'illustrée aux figures 3 et 4, de façon à réaliser le moulage de la prothèse dentaire.

Les figures 3 et 4 illustrent une embase 11 qui est globalement complémentaire à l'ensemble 1. Ainsi, l'embase 11 comporte une paroi 12 qui est en forme d'arc de cercle dont la courbure suit celle de la paroi 2 de l'ensemble 1. La paroi 12 comporte une partie vestibulaire 13 et une partie radiculaire 14. La partie radiculaire 14, ou partie apicale, est destinée à mouler les racines des dents synthétiques. Dans l'exemple des figures, l'embase 11 est formée du même matériau plastique de synthèse que l'ensemble 1.

L'embase 11 comprend en outre trois tiges 17.1, 17.2 et 17.3 et un composant de référence 18 qui est en forme de cube. Les tiges 17.1, 17.2 et 17.3 sont rectilignes et reliées à la partie radiculaire 14 de la paroi 2 et elles convergent dans une région linguale de l'embase 11, où elles sont solidarisées au composant de référence 18. Le composant de référence 18 présente une surface de positionnement 19 qui est plane et adaptée pour coopérer avec la surface de positionnement 9 de l'ensemble 1.

Comme le montrent les figures 5 et 6, la coopération des surfaces de positionnement 9 et 19 se fait par appui plan et elle permet de positionner précisément l'ensemble 1 par rapport à l'embase 11. Ainsi, l'ensemble 1 et l'embase 11 peuvent former un moule pour réaliser le moulage de la prothèse dentaire.

Un procédé conforme à l'invention comprend les étapes suivantes:
- Fabriquer un guide opaque aux rayons X, en vue de réaliser des images de la mâchoire du patient, afin de respecter son esthétique.
- Définir un modèle optique tridimensionnel de la mâchoire avec les dents naturelles, par acquisition d'images par rayons X. Ce modèle optique tridimensionnel est usuellement dénommé « empreinte optique ».
- A partir du modèle optique tridimensionnel, fabriquer un guide de chirurgie.
- A partir du modèle optique tridimensionnel, réaliser l'ensemble 1.
- Réaliser l'embase 11 avec une forme globalement complémentaire à l'ensemble 1. Cette étape peut être mettre en oeuvre une méthode de prototypage rapide telle que l'impression tridimensionnelle, la stéréolithographie, l'usinage à commande numérique ou la construction additive directe par laser.

Les figures 5 et 6 illustrent les étapes supplémentaires suivantes d'un procédé conforme à l'invention:
- Positionner des dents synthétiques sur l'ensemble 1 avec leurs faces vestibulaires placées dans les premières cavités 5 et leurs faces occlusales placées dans les deuxièmes cavités 6.
- Former un moule en mettant en place les composants de référence 8 et 18 de l'ensemble 1 sur l'embase 11, via leurs surfaces de positionnement 9 et 19. Dans cette position illustrée aux figures 5 et 6, l'ensemble 1 et l'embase 11 sont jointives. En particulier, une arête 3.1, visible à la figure 1, de l'ensemble 1 est en contact avec une arête 13.1, visible à la figure 3, de l'embase 11.
- Injecter une résine dans le moule et autour des dents synthétiques, de façon à réaliser le moulage de la prothèse dentaire. Après l'injection de résine, la prothèse dentaire est moulée avec les dents synthétiques fixées précisément en position.

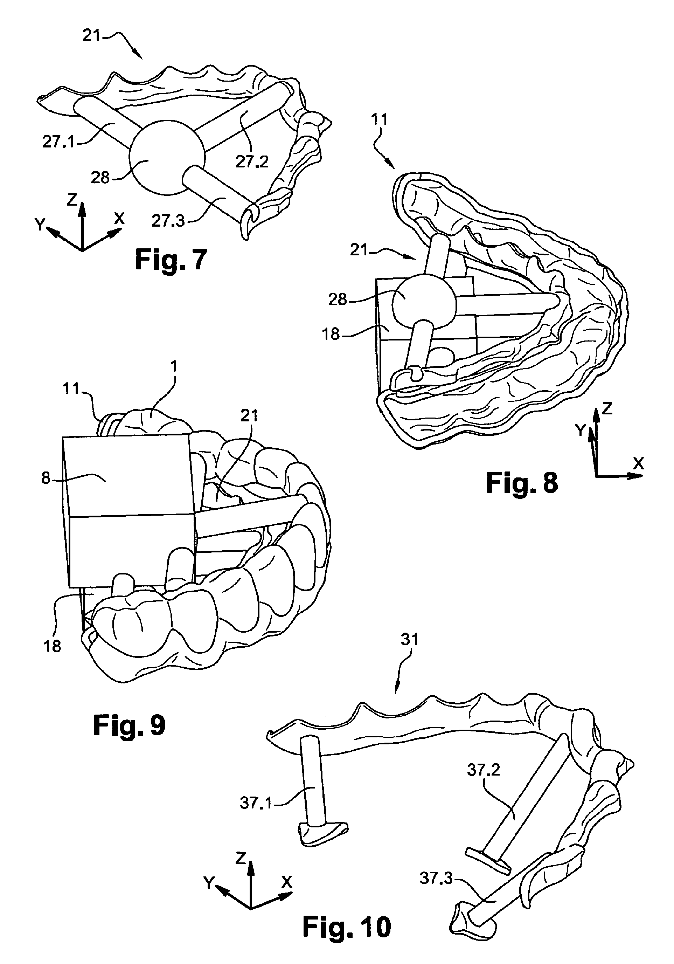

La figure 7 illustre une armature 21 qui est métallique et destinée à renforcer une prothèse dentaire. En d'autres termes, une telle prothèse dentaire est de type composite, car elle comprend de la résine et un alliage métallique. L'armature 21 a la forme d'un arc de cercle dont la courbure suit celle de la paroi 2 de l'ensemble 1. L'armature 21 est destinée à être placée du côté lingual de la prothèse dentaire.

L'armature 21 comprend trois tiges 27.1, 27.2 et 27.3 et un composant de guidage 28 qui est en forme de sphère. Les tiges 27.1, 27.2 et 27.3 sont reliées à une partie linguale de l'armature 21, en des points répartis sur l'arc de cercle. Les tiges 27.1, 27.2 et 27.3 convergent dans une région linguale de l'armature 21, où elles sont solidarisées au composant de guidage 28.

Pour coopérer avec l'armature 21, le composant de référence 8 de l'ensemble 1 comprend une surface de guidage 9.2 qui est substantiellement en forme de cavité sphérique, de façon à recevoir le composant de guidage 28. De même, le composant de référence 18 de l'embase 11 comprend une surface de guidage 19.2 qui est substantiellement en forme de cavité sphérique, de façon à recevoir le composant de guidage 28.

Comme le montrent les figures 8 et 9, la surface sphérique du composant de guidage 28 est adaptée pour coopérer avec des surfaces sphériques 9.2 et 19.2 complémentaires qui sont formées respectivement par l'ensemble 1 et l'embase 11. En outre, pour positionner l'armature 21 par rapport à l'ensemble 1 et à l'embase 11, les composants de référence 8 et 18 comportent des rainures complémentaires aux tiges 27.1, 27.2 et 27.3.

Suivant un procédé conforme à un deuxième mode de réalisation de l'invention, avant l'étape pour former un moule, l'armature 21 est insérée entre l'ensemble 1 et l'embase 11. Le composant de guidage 28 est reçu dans la surface de guidage 19.2 de l'embase 11, puis dans la surface de guidage 9.2 de l'ensemble 1.

Puis, dans la position illustrée à la figure 9, on injecte une résine dans le moule et autour des dents synthétiques, de façon à réaliser le moulage de la prothèse dentaire.

La figure 10 illustre une armature 31 similaire à l'armature 21. La description de l'armature 21 donnée ci-avant en relation avec les figures 7 à 9 peut être transposée à l'armature 31, à l'exception des différences énoncées ci-après.

L'armature 31 diffère de l'armature 21, car elle comporte trois pattes 37.1, 37.2 et 37.3 indépendantes et non convergentes. Les pattes 37.1, 37.2 et 37.3 sont agencées pour prendre appui sur une surface de positionnement non représentée.

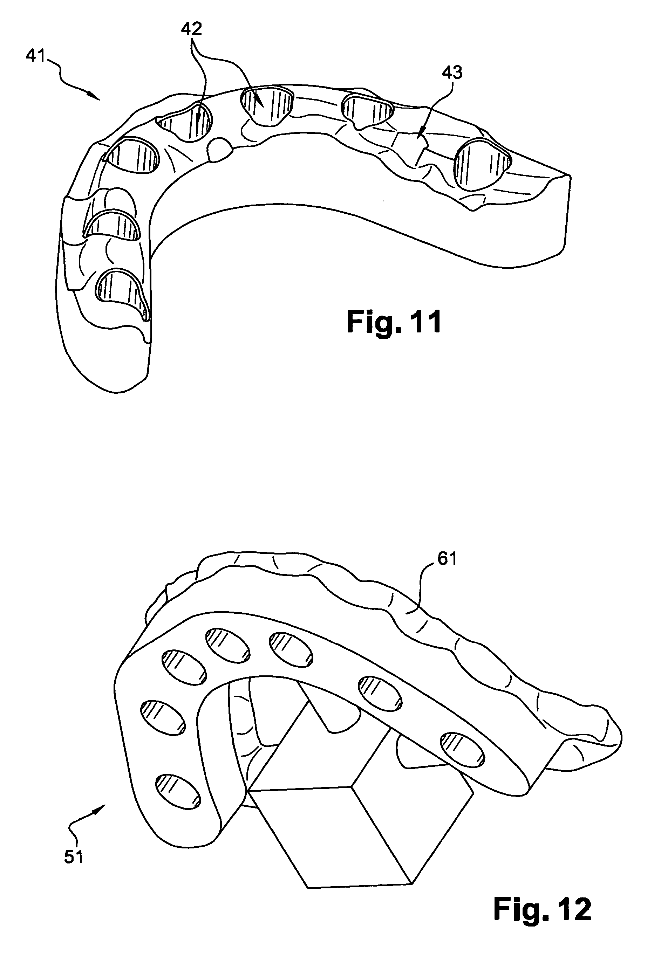

La figure 11 illustre un guide de perçage 41 en arc de cercle. Le guide de perçage 41 présente plusieurs orifices traversants 42. Le guide de perçage 41 est formé avec une surface de positionnement 43 adaptée pour prendre appui avec une face externe 15 de l'embase 11.

Suivant un procédé conforme à l'invention, après l'étape d'injection de résine, la prothèse dentaire est percée de façon à réaliser des alésages non représentés.

Pour percer la prothèse dentaire, le guide de perçage 41 est positionné sur l'embase 11, par l'appui de la surface de positionnement 43 sur la face externe 15. Les alésages ainsi réalisés traversent certaines des dents synthétiques, ce qui permet le passage de vis pour solidariser la prothèse dentaire à la mâchoire du patient.

La figure 12 illustre un guide de perçage 51 similaire au guide de perçage 41. La description du guide de perçage 41 donnée ci-avant en relation avec la figure 11 peut être transposée guide de perçage 51, à l'exception des différences énoncées ci-après.

Le guide de perçage 41 diffère du guide de perçage 51, car il est solidarisé à une embase 61 qui est similaire à l'embase 11. Dans l'exemple de la figure 12, le guide de perçage 51 et l'embase 61 sont monobloc et venus de matière. La solidarisation entre le guide de perçage 51 et l'embase 61 simplifie le procédé de fabrication de la prothèse dentaire, car il supprime l'étape de positionnement du guide de perçage 41 sur l'embase 11.

Selon d'autres modes de réalisation de l'invention non représentés, pris isolément ou selon toute combinaison techniquement admissible:
- Il est possible de transférer le positionnement des dents synthétiques par rapport à une armature métallique, de type prothèse partielle base métal, ce qui permet de dissocier et délocaliser les étapes de finition, qui nécessitent habituellement des échanges coûteux entre le cabinet dentaire et le fabricant de prothèse dans le cas d'une fabrication délocalisée.
- S'il subsiste des dents naturelles sur la mâchoire, les moyens de positionnement peuvent être formés par des semelles conformées pour prendre appui par complémentarité de forme sur ces dents naturelles.

## Revendications

1. Ensemble (1), pour positionner des dents synthétiques en vue du moulage d'une prothèse dentaire à implanter sur une mâchoire, l'ensemble (1) comprenant une paroi (2), une partie vestibulaire (3) de la paroi (2) présentant des premières cavités (5) ayant chacune une forme complémentaire à au moins une portion de la face vestibulaire d'une dent synthétique respective, une partie occlusale (4) de la paroi (2) présentant des deuxièmes cavités (6) ayant chacune une forme complémentaire à au moins une portion de la face occlusale d'une dent synthétique respective, l'ensemble (1) comprenant en outre des moyens de positionnement de l'ensemble (1) sur une embase (11 ; 61) globalement complémentaire à l'ensemble (1) de façon à réaliser le moulage de la prothèse dentaire, lesdits moyens de positionnement comprenant :
- au moins deux tiges (7.1, 7.2, 7.3) qui sont reliées à la partie occlusale (4) de la paroi (2) et qui convergent dans une région linguale de l'ensemble (1) ; et
- un composant de référence (8), tel qu'un cube, présentant une surface de positionnement (9), de préférence plane, destinée à coopérer par complémentarité de forme avec une surface de positionnement (19) de l'embase (11 ; 61) de façon à former un moule pour réaliser le moulage de la prothèse dentaire.

2. Ensemble (1) selon la revendication 1, dans lequel le composant de référence comprend en outre une surface de guidage (9.2) substantiellement en forme de cavité sphérique de façon à recevoir un composant de guidage (28) d'une armature (21), de préférence métallique, destinée à renforcer la prothèse dentaire.

3. Ensemble (1) selon l'une des revendications précédentes, dans lequel la paroi (2) est en cire, en métal ou en matériau plastique de synthèse.

4. Procédé, pour fabriquer une prothèse dentaire à implanter sur une mâchoire, le procédé comprenant les étapes :
- définir un modèle optique tridimensionnel de la mâchoire, par acquisition d'images ;
- à partir du modèle optique tridimensionnel, réaliser un ensemble (1) selon la revendication 2 ;
- réaliser une embase (11 ; 61) globalement complémentaire à l'ensemble (1) ;
- positionner des dents synthétiques sur l'ensemble (1) avec leurs faces vestibulaires placées dans des premières cavités (5) respectives et leurs faces occlusales placées dans des deuxièmes cavités (6) respectives ;
- insérer une armature (21), de préférence métallique, entre l'ensemble (1) et l'embase (11 ; 61), de façon à renforcer la prothèse dentaire, un composant de guidage (28) de l'armature (21) étant reçu dans la surface de guidage (9.2) ;
- former un moule en mettant en place les moyens de positionnement de l'ensemble (1) sur l'embase (11 ; 61) ; et
- injecter une résine dans le moule de façon à réaliser le moulage de la prothèse dentaire.

5. Procédé selon la revendication 4, dans lequel l'étape pour réaliser l'ensemble (1) met en oeuvre une méthode de prototypage rapide telle que l'impression tridimensionnelle, la stéréolithographie, l'usinage à commande numérique ou la construction additive directe par laser.

6. Procédé selon l'une des revendications 4 à 5, dans lequel, après l'étape d'injection de résine, la prothèse dentaire est percée, de façon à réaliser des alésages traversant certaines dents synthétiques, au moyen d'un guide de perçage (41 ; 51) positionné sur l'embase (11 ; 61).

7. Procédé selon l'une des revendications 4 à 6, dans lequel l'acquisition d'images est réalisée au moyen de rayons X ou par numérisation d'un modèle physique primaire.

## Claims

1. An assembly (1) for positioning synthetic teeth for molding a dental prosthesis to be implanted on a jaw, the assembly (1) comprising a wall (2), a vestibular part (3) of the wall (2) having first cavities (5) each having a shape complementary to at least one portion of the vestibular surface of a respective synthetic tooth, an occlusal part (4) of the wall (2) having second cavities (6) each having a shape complementary to at least one portion of the occlusal surface of a respective synthetic tooth, the assembly (1) also comprising means for positioning the assembly (1) on a base (11; 61) globally complementary to the assembly (1) so as to perform molding of the dental prosthesis, said positioning means comprising:
- at least two rods (7.1, 7.2, 7.3) that are connected to the occlusal part (4) of the wall (2) and that converge in a lingual region of the assembly (1); and
- a reference component (8), such as a cube, having a positioning surface (9), which is preferably flat, designed to cooperate by shape matching with a positioning surface (19) of the base (11; 61) so as to form a mold to perform the molding of the dental prosthesis.

2. The assembly (1) according to claim 1, wherein the reference component also comprises a guide surface (9.2) substantially in the shape of a spherical cavity so as to receive a guide component (28) for a framework (21), preferably made from metal, designed to reinforce the dental prosthesis.

3. The assembly (1) according to one of the preceding claims, wherein the wall (2) is made from wax, metal, or a synthesized plastic.

4. A method for manufacturing a dental prosthesis to be implanted on a jaw, the method comprising the following steps:
- defining a three-dimensional optical model of the jaw, through image acquisition;
- from the three-dimensional optical model, producing an assembly (1) according to claim 2;
- making a base (11; 61) globally complementary to the assembly (1);
- positioning synthetic teeth on the assembly (1) with their vestibular surfaces placed in first respective cavities (5) and their occlusal surfaces placed in second respective cavities (6);
- inserting a framework (21), preferably made from metal, between the assembly (1) and the base (11; 61), so as to reinforce the dental prosthesis, a guide component (28) for guiding the framework (21) being received in the guide surface (9.2);
- forming a mold by placing the positioning means of the assembly (1) on the base (11; 61); and
- injecting a resin into the mold so as to produce the molding of the dental prosthesis.

5. The method according to claim 4, in which the step for producing the assembly (1) implements a rapid prototyping methods such as three-dimensional printing, stereolithography, numerical control machining or direct additive laser construction.

6. The method according to one of claims 4 to 5, in which, after the resin injection step, the dental prosthesis is pierced, so as to produce bores passing through certain synthetic teeth, using a piercing guide (41; 51) positioned on the base (11; 61).

7. The method according to one of claims 4 to 6, wherein the image acquisition is done using x-rays or digitization of a primary physical model.

## Patentansprüche

1. Anordnung (1) zur Positionierung künstlicher Zähne im Hinblick auf das Formen einer auf einen Kiefer zu implantierende Zahnprothese, wobei die Anordnung (1) eine Wand (2) umfasst, wobei ein vestibulärer Abschnitt (3) der Wand (2) erste Hohlräume (5) aufweist, die jeweils eine komplementäre Form zu mindestens einem Abschnitt der vestibulären Seite eines jeweiligen künstlichen Zahns haben, wobei ein okklusaler Abschnitt (4) der Wand (2) zweite Hohlräume (6) aufweist, die jeweils eine komplementäre Form zu mindestens einem Abschnitt der okklusalen Seite eines jeweiligen künstlichen Zahns haben, wobei die Anordnung (1) ferner Positionierungsmittel der Anordnung (1) auf einer global zu der Anordnung (1) komplementären Basis (11; 61) aufweist, um das Formen der Zahnprothese durchzuführen, wobei die Positionierungsmittel umfassen:
- mindestens zwei Stangen (7.1, 7.2, 7.3), die mit dem okklusalen Abschnitt (4) der Wand (2) verbunden sind und die in einer lingualen Region der Anordnung (1) konvergieren; und
- ein Referenzbauteil (8) wie einen Würfel, der eine vorzugsweise ebene Positionierungsfläche (9) aufweist, die dazu bestimmt ist, durch Formkomplementarität mit einer Positionierungsfläche (19) der Basis (11; 61) derart zusammenzuarbeiten, dass eine Form gebildet wird, um das Formen der Zahnprothese durchzuführen.

2. Anordnung (1) nach Anspruch 1, wobei das Referenzbauteil ferner eine Führungsfläche (9.2) umfasst, die substantiell wie ein kugelförmiger Hohlraum geformt ist, um ein Führungsbauteil (28) einer vorzugsweise metallischen Armierung (21) aufzunehmen, die zur Verstärkung der Zahnprothese bestimmt ist.

3. Anordnung (1) nach einem der vorangehenden Ansprüche, wobei die Wand (2) aus Wachs, aus Metall oder aus synthetischem Kunststoffmaterial ist.

4. Verfahren zur Herstellung einer auf einen Kiefer zu implantierenden Zahnprothese, wobei das Verfahren die Schritte umfasst:
- Definieren eines dreidimensionalen optischen Modells des Kiefers durch Bilderfassung,
- Herstellen einer Anordnung (1) nach Anspruch 2 auf der Basis des dreidimensionalen optischen Modells;
- Herstellen einer zu der Anordnung (1) global komplementären Basis (11; 61),
- Positionieren der künstlichen Zähne auf die Anordnung (1) mit ihren vestibulären Seiten in erste jeweilige Hohlräume (5) platziert und ihren okklusalen Seiten in zweite jeweilige Hohlräume (6) platziert,
- Einsetzen einer vorzugsweise metallischen Armierung (21) zwischen die Anordnung (1) und die Basis (11; 61) derart, dass die Zahnprothese verstärkt wird, wobei ein Führungsbauteil (28) der Armierung (21) in der Führungsfläche (9.2) aufgenommen wird,
- Formen einer Form durch Platzieren der Positionierungsmittel der Anordnung (1) auf der Basis (11; 61) und
- Einspritzen eines Harzes in die Form, um das Formen der Zahnprothese durchzuführen.

5. Verfahren nach Anspruch 4, wobei der Schritt zur Herstellung der Anordnung (1) eine Schnell-Prototypisierungsmethode umsetzt, wie den dreidimensionalen Druck, die Stereolithographie, die Bearbeitung mit numerischer Steuerung oder die direkte additive Konstruktion durch Laser.

6. Verfahren nach einem der Ansprüche 4 bis 5, wobei nach dem Schritt des Einspritzens des Harzes die Zahnprothese in der Art durchbohrt wird, dass mittels einer auf der Basis (11; 61) positionierten Bohrführung (41; 51) Bohrungen durchgeführt werden, die bestimmte künstliche Zähne durchqueren.

7. Verfahren nach einem der Ansprüche 4 bis 6, wobei die Bilderfassung mit Hilfe von Röntgenstrahlen oder durch Digitalisierung eines primären physischen Modells durchgeführt wird.
